(19) Europäisches Patentamt
European Patent Office
Office européen des brevets

(11) **EP 3 250 917 B1**

(12) **EUROPEAN PATENT SPECIFICATION**

(45) Date of publication and mention
of the grant of the patent:
**12.01.2022 Bulletin 2022/02**

(21) Application number: **16742857.2**

(22) Date of filing: **21.01.2016**

(51) Int Cl.:
*G01N 27/62* *(2021.01)*  *G01N 33/02* *(2006.01)*
*G01N 35/00* *(2006.01)*  *G01N 1/28* *(2006.01)*

(86) International application number:
**PCT/IB2016/050305**

(87) International publication number:
**WO 2016/120762 (04.08.2016 Gazette 2016/31)**

(54) **AUTOMATIC QUANTITATIVE REGRESSION IN A MASS SPECTROMETER**

AUTOMATISCHE QUANTITATIVE REGRESSION IN EINEM MASSENSPEKTROMETER

RÉGRESSION QUANTITATIVE AUTOMATIQUE DANS UN SPECTROMÈTRE DE MASSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.01.2015 US 201562107601 P**

(43) Date of publication of application:
**06.12.2017 Bulletin 2017/49**

(73) Proprietor: **DH Technologies Development Pte.
Ltd.**
**Singapore 739256 (SG)**

(72) Inventor: **BURTON, Lyle**
**Woodbridge, Ontario L4L 3B7 (CA)**

(74) Representative: **J A Kemp LLP**
**80 Turnmill Street**
**London EC1M 5QU (GB)**

(56) References cited:
**EP-A2- 1 672 673**    **US-A1- 2005 165 560**
**US-A1- 2008 086 279**    **US-A1- 2012 283 122**
**US-A1- 2013 245 830**    **US-A1- 2014 273 042**

- **MARTIN A FISCHLER ET AL: "Random sample
consensus", COMMUNICATIONS OF THE ACM,
ASSOCIATION FOR COMPUTING MACHINERY,
INC, UNITED STATES, vol. 24, no. 6, 31 December
1987 (1987-12-31), pages 381-395, XP058335178,
ISSN: 0001-0782, DOI: 10.1145/358669.358692**

Printed by Jouve, 75001 PARIS (FR)

**Description**

The within teachings are directed to a manner of generating a regression model in an automated fashion.

Absolute quantitation of analytes is important in various fields, including for example the screening of food products for pesticides where it is important to know that a particular compound is both present and its concentration. Generally quantification is performed by a manner in which a calibration curve is generated. This curve generally links an analytical value that is a response provided by an analytical device or process to the specific concentration of an analyte that was used to generate the value. This curve is generally created by taking a set of standards that have different known concentrations and running the standards through the analysis. Each of these standards will generate an analytical value from the analysis and a plot can be generated that relates the analytical value to the concentration. When a corresponding sample with an unknown concentration of the analyte is analyzed, an analytical value will be obtained which can then be converted into a concentration value by referencing the calibration curve. Generally, a regression curve model is derived from the data points to generate a best-fit line through the points that allows a correlation between analytical values and concentrations other than the standards through interpolation and/or extrapolation.

The standards can be generated by various methods known in the art. One method involves making successive dilutions of a starting mixture containing the highest concentration of the analyte(s). In mass spectrometry (MS) analysis, it is possible to analyze multiple analytes simultaneously and a calibration standard solution containing multiple analytes can therefore be made. This can result in the generation of standards that span the dynamic range for all compounds and in some cases the same absolute concentration range. However since the MS sensitivity of the compounds can be very different, for most compounds there are low concentration standards which are below the limit-of-quantitation (LLOQ) or above the upper-limit (ULOQ) or both. In order to obtain acceptable calibration curves these points below the LLOQ or above the ULOQ must be excluded on an analyte-by-analyte basis. This can be done manually, but is labour intensive

Ideally, all the analytical values and associated concentrations from the various standards would result in a concentration curve that is preferably linear. However, due to limitations in equipment such as limits relating to LLOQ or ULOQ, improper standard and/or sample preparation and other possible reasons, not all analytical values and their associated concentrations should be utilized in creating a calibration curve. At times, one or more points that deviate significantly from the general trend provided by the remaining points may be sufficient to upset the generated calibration such that the curve is not truly representative of the analytical value to concentration relationship. In such cases, these "outlier" points are preferably excluded when creating the calibration curve. If only a few points are outliers in a data set of many points, it is visually easy to determine manually what points should be excluded, it can however be more difficult to perform this task manually if the number of "outliers" approaches or exceeds the number of valid points.

In addition, such a procedure can be time consuming when performed manually. For example, in mass spectrometry analysis where it is possible to analyze multiple analytes simultaneously, a standard solution can be prepared containing several hundred different compounds having known concentrations. Performing a manual determining of outliers for such solutions and the several hundred calibration curves generated is also very labour intensive.

Attempts to automate the process of generating a calibration curve have had varying levels of success. In one method, the calibration curve can be automatically generated using all the data points collected, irrespective of whether one or more outliers exist. This can lead to improper models which are not truly representative of the analytical value to concentration relationship. Attempts have also been made to automate the removing of outliers from a dataset. Most of these attempts assume that the majority of points are valid, so called "inliers" and attempt to remove a relatively small number of outliers. One such method is the RANSAC (RANdom SAmple Consensus) procedure which randomly selects a subset of the original data, a model is fitted to the subset and the remaining points are then tested against the generated model and any remaining points that fit into the model, are then incorporated into a new model and this procedure is performed in an iterative fashion until the model can no longer be improved. This method suffers from the drawback that it performs poorly in cases where the number of outliers exceed the number of valid points, as is often the case when dealing with environmental samples in mass spectrometry. Other methods that are sometime used look at the residuals of the data to the determined fit model. This raises difficulties if the number of outliers is large since the average residual may also be large. For example, for the case where half of the points are considered to be outside of the fitted region, they are not, statistically speaking, considered to be "outliers" and may not be appropriately removed in this case. Also points which differ significantly from the fitted region, especially with larger concentration values, can unduly affect the calculated fit making it appear as if most of the remaining points are outliers. Some techniques attempt to remove only one or two points, but this does not work if there are many points which need to be removed.

EP 1 672 673 A2 discloses a method of removing outliers from a data set.

The present invention is defined in the claims.

In some embodiments the method can include that the predefined curve fit type is linear, the first curve fit metric is r or $R^2$ and the identifying of the subset of calibration point pairs is performed by: i) selecting one or more calibration point pairs at each of 3 or 4 consecutive concentration levels and performing linear regression on said calibration point pairs so as to determine r or $R^2$ and coefficients of a linear equation; ii) iteratively repeating step i) until all possible one or more calibration point pairs at consecutive 3 or 4 concentration levels have had their r or $R^2$ and coefficients of a linear equation determined; and iii) setting the subset of calibration pairs to be the one or more calibration point pairs at each of 3 or 4 consecutive concentration levels that has the highest r or $R^2$ value. In some embodiments, the method can include where the linear regression is performed by forcing the coefficients of the linear equation through a predetermined calibration point. In some embodiments, the predetermined calibration point is the origin (0,0).

In some embodiments, the method of the present teachings can include that the curve fit metric is $R^2$.

In some embodiments, the method of the present teachings can include that the predefined curve fit type is a linear or quadratic function.

In some embodiments, the method can include that the subset contains at least 20% of the total number of calibration point pairs.

In some embodiments, the method can include that the subset of points initially contains 3 or 4 calibration point pairs.

The method includes that the analytical value is a peak area of an analytical analysis.

The method includes that the analytical analysis is a mass spectrometer analysis.

In some embodiments, the method can include that the first curve fit metric is accuracy.

In some embodiments, the method can include that a threshold for the accuracy of +/- 30% is utilized.

In some embodiments, the method can include that the second curve fit metric is the same as the first curve fit metric.

In some embodiments, the method can include that the first curve fit metric includes the forcing of the best fit through a predetermined point and wherein the second curve fit metric does not utilize the forcing through a predetermined point. In some embodiments, the method can include that the predetermined point is the origin.

In some embodiments, the method as claimed can include that in step f), no additional calibration point pairs are added to the subset.

The method can include that the data store is a memory array in a computerized device and said computerized device is configured to operate and control said analytical device. The analytical device is a mass spectrometer. The method further includes the usage of the calibration curve model to determine an amount of the analyte in a sample having an unknown concentration.

In some embodiments, the method can include that the curve fit metric comprises both accuracy and one of either r or $R^2$.

The present teachings provide a method of determining the concentration of one or more analytes in a sample comprising; a) providing a plurality of calibration standards, each of said calibration standards containing a known concentration of the one or more analytes; b) providing a mass spectrometer; c) providing a digital computer operably connected to said mass spectrometer, said digital computer comprising a processing unit, a data I/O controller for receiving and sending information to and from said mass spectrometer, a display member, and a data storage device; d) determining a peak area value for each of said one or more analytes in each of said calibration standards by analyzing each of said calibration standards containing the known concentration in said mass spectrometer and for each of said one or more analytes, associating each of said peak area value with its corresponding calibration standard concentration as a calibration point pair in said data storage device; e) for each of said one or more analytes, using said processing unit to identify a subset of calibration point pairs, for use in generating a calibration curve, that best fits a predefined curve fit type, the subset of calibration point pairs being pairs at consecutive concentration levels and the determination of best fit being performed by use of a first curve fit metric; f) for each of said one or more analytes, using said processing unit to increase the number of calibration point pairs in the subset, by testing whether the inclusion of one or more additional calibration point pairs at a next immediate concentration level either higher or lower than the subset and any other calibration point pair previously tested would result in the generation of a suitable calibration curve by way of a second curve fit metric, and including said additional calibration point pair into said subset if it is; g) repeating step f) until all calibration point pairs for each of said one or more analytes have been tested; h) for each of said one or more analytes, using said processing unit to create a calibration curve from the resulting subset of calibration point pairs by determining coefficients and/or exponents of a model equation of said predefined curve fit type and storing said coefficients and/or exponents of the model equation in the data storage device; i) performing a mass spectrometer analysis on the sample, the sample containing or suspected of containing an unknown concentration of the one or more of the analytes and obtaining an unknown peak area value for each of the one or more analytes; j) for each of the one or more analytes, using said processing unit to correlate the unknown peak area value to a determined concentration using said model equation; k) outputting said determined concentration for each of said one or more analytes on said display member.

FIG. 1 depicts a linear regression curve for all the data points in Example 1.
FIG. 2 depicts a linear regression curve determined for the concentration levels at 5, 10 and 20 from Example 1
FIG. 3 depicts a linear regression curve determined for the concentration levels at 10, 20 and 50 from Example 1

FIG. 4 depicts a linear regression curve determined for the concentration levels at 20, 50 and 100 from Example 1

FIG. 5 depicts a linear regression curve determined for the concentration levels at 50, 100 and 200 from Example 1

FIG. 6 depicts a linear regression curve for the all the data points in Example 2

FIG. 7A and B depicts a linear regression curve determined for the concentration levels at 0.05, 0.1, 0.2 and 0.5 from Example 2 that is forced through the origin

FIG. 8 depicts a linear regression curve determined for the concentration levels at 0.1, 0.2, 0.5 and 1.0 from Example 2 that is forced through the origin

FIG. 9 depicts a linear regression curve determined for the concentration levels at 10, 20, 50 and 100 from Example 2 that is forced through the origin

FIG. 10A and B depicts a linear regression curve determined for the concentration levels at 10, 20, 50 and 100 from Example 2

FIG. 11 depicts a linear regression curve determined for the concentration levels at 10, 20, 50 and 100 from Example 2

FIG. 12A and B depicts a linear regression curve determined for the concentration levels at 5, 10, 20, 50 and 100 from Example 2

FIG. 13A and B depicts a linear regression curve determined for the concentration levels at 5, 10, 20, 50, 100, and 200 from Example 2

FIG. 14 depicts a zoomed in linear regression curve determined for the concentration levels at 2, 5, 10, 20, 50, 100 and 200 from Example 2

FIG. 15 depicts a schematic of a system to be utilized with the within teachings.

The following description of embodiments are only exemplary and illustrative of the instantly described invention and should not be understood to be limiting of the present teachings to the precise embodiments disclosed. These descriptions are not intended to be exhaustive and modifications and variations are possible in light of the within teachings or by practicing of the present teachings.

While the present teachings in some embodiments make use of software, it should be appreciated that the present teachings may be implemented on a combination of both software and hardware.

The within teachings provide for a manner of generating a calibration curve from data which includes for example analytical values obtained from performing an analytical method on calibration standards. The creation of a calibration curve through automative means may decrease the amount of time spent that an operator would normally lose when processing large numbers of analytes. In addition, an automated method provides for consistent and repeatable results since even with the strictest of instructions and standard operating procedures, different operators can achieve slightly different results depending on the order in which points are excluded.

The calibration standards can be created using any method known in the art. For mass spectrometer standards, individual standards can be prepared containing a number of different types of analytes due to the ability of a mass spectrometer to analyze multiple analytes simultaneously.

The analytical method that can be utilized in generating the analytical value can be any analytical method that is typically used to quantify a given analyte and utilizes a generated calibration curve. Typical examples of analytical methods that may benefit from the within method include various types of spectrometry techniques including various types of optical related analysis, such as fluorescence where the transmission or absorbance of light of an analyte in a particular sample is related to its concentration. Particularly, the within teachings are useful in an automated fashion for generating calibration curves for use in mass spectrometry analysis and more particularly in liquid chromatography mass spectrometry analysis.

The term "analytical value" is intended to include any measurement value, including physical measurement values, obtained from an analytical analysis where the value is known or suspected to be a function of the concentration. In optical based analysis, the absorbency and transmission nature of light, either visible, UV, etc. through optically sensitive samples is governed by Beer's law and can be correlated with concentration. In such cases, the analytical value can be considered to be preferably absorbance though % transmission may also be used. In other cases, a physical count related to the number of analytes can be determined using some form of detector. In some of these analytical measurement techniques, a spectrum or chromatogram is generated and a resulting peak in the spectrum or chromatogram can be utilized for determination of quantitative values, either relative or absolute, depending on whether a reference sample was utilized. For example, in quantitative mass spectrometry, a peak is depicted in a chromatogram and either the count value of the peak of the curve or more preferably, the area under the curve for that peak is related to its concentration. The count value or peak area is considered to be the analytical value.

The within described teachings can be performed on a digital computer device. The device can typically contain a processing unit such as a CPU, memory storage and a controller I/O. The controller I/O may be operably connected to the analytical device to both receive and transmit information therebetween. In some embodiments, the computer can be used to send instructions and receive results to and from the analytical device.

The calibration curve to be generated is preferably linear in nature being represented by the known formula y=ax+b where y is the analytical value (expected to have some degree of error), x is the concentration (expected to have minimal error), a is the slope of the calibration curve and b is the y-intercept. The values of a and b for this linear equation are coefficients of the equation that define the fitted linear model and are parameters of the fitted calibration curve model. Techniques used to generate a model from data that is generally linear are known and can include linear regression analysis. The most common linear regression model analysis involves the method of least squares where the sum of squared residuals from a set of data points is minimized. Residuals being the difference between a predicted value that is based on a generated model and the actual value. While data having linear regression models are preferred, other types of data may utilize calibration curves which are not generally linear. For example, calibration curves utilized in enzyme measurements are sometimes sigmoid type in nature (s-shaped). In other cases, models, including quadratic may also be utilized. Even in cases where a sigmoid type curve is present, there are still portions of the curve which are linear in nature and some form of linear regression may still be applied if analysis is limited to the linear portions of the curve.

Other forms of non-linear regression analysis can also be used which attempt to fit the data to non-linear model equations such as for example, quadratic, power, first-order log and second-order log which can be represented by the following model equations:

Quadratic: $y=ax^2+bx+c$
Power: $y=ax^b$
First-order log $y=a\ln(x)+b$
Second-order log: $\ln(y)=a\ln^2(x)+b\ln(x)+c$.

In each case, coefficients and exponentials of the various equations are the parameters of the calibration curve model and can be determined for the purpose of generating a fitted calibration curve model for the points. Generally, the method of generating a calibration curve involves the following steps. First, provide for a number of standard sample solutions that each contain a known concentration of the given analyte. In some types of analysis, for example, mass spectrometry, it is possible for each standard sample solution to comprise a number of different analytes that can be measured simultaneously. Each sample is then tested using a quantitative analytical technique that provides an analytical value specific to that analysis that is representative of the concentration.

A general manner of performing the within teachings may comprise the following steps:

1) Finding a small number of consecutive points (often in the middle of the curve) which give the best fit. In an embodiment, this may be the best three or four consecutive points (or more accurately three or four concentration levels if there are multiple points at one concentration).
2) Extending this starting 'seed' one concentration level lower or higher provided that an acceptable fit and/or accuracy is retained.
3) Repeating step (2) until the range of points can be extended no further.
4) The above steps are performed using standard techniques to remove outliers so that a small number of inaccurate points does not prevent the full model from being determined.

Step (1) may be performed by forcing any derived model through a predefined point. This may, for example, be the origin where the intercept is 0. It has been found that for most practical cases, such a procedure finds a suitable middle starting point from the dataset. Once this starting point is found the extension of this range (steps 2 and 3 and/or 4) uses the actual regression type which is not forced through a predefined point, which may be linear or can be quadratic or anything else.

It is very common in Liquid Chromatography (LC)/MS quantitation to use accuracy as the primary quality metric. (The accuracy is the ratio of the actual known concentration to the concentration calculated using the regression equation.) CV is also commonly used (this is the standard deviation of the calculated concentration for multiple points with the same known concentration). The correlation coefficient and related entities may also be used as a quality metric.

The series of analytical values and their corresponding concentrations are then represented in some manner to form a collection of calibration curve points. While in the within teachings and examples provided herein, these points have been physically plotted for the purpose of allowing a better visualizing of the techniques described, it should be appreciated that the actual physical plotting of the points is not necessary and that this can also be achieved by other means, for example, by an internal representation in a computerized device and numerical computerized processing of such data points to determine appropriate curve fits in subsequent steps. Thus, in reference to the usage of the term "representing" in the within teachings, it is intended to include, for example, both the physical plotting of the points on a plot or the computerized representation of such a plot in a computerized medium or device. The calibration curve points can be represented in a non-graphical manner by way of a collection of calibration point pairs wherein a discrete pair of values representing the analytical value and its corresponding calibration standard concentration are associated together and each pair is collectively stored in a data store. As would be appreciated, each of these pairs is representative of a point on a calibration curve if the information was plotted graphically. The data store can include any known method to store such data. Accordingly in the within teachings, the usage of the term "points" or related terminology should be understood to refer to both points physically plotted via graphical means and the usage of calibration point pairs which are the representation of the paired analytical value and concentration value, that is stored in a computerized type means. This can refer, for example, to the storage of the points in a variable array or other manner of storage inside a computer's memory. This can also include the storage of the calibration point pairs in a computerized storage medium which can include RAM disk, hard disk, tape drive, solid state memory or disk, etc. In some embodiments, multiple analytical values may be obtained at the same concentration level, that is, replicate measurements of the same standard sample solution or measurements of different standard sample solutions having the same concentration may be included in the dataset. In this manner, the data from such points can be averaged to determine a mean value that can be used or alternatively, the data points can be cumulatively used. In other embodiments, an additional analysis may be performed on the points at the same concentration to determine if any such data points should be excluded. This can be performed, for example, using a metric such as accuracy.

Once the calibration curve points have been represented, an initial search of a subset of the number of total points is performed to identify consecutive points which when fitted to an arbitrary model, provides for a best fit. The models can be, for example, any such models referred to previously. This initial search may force the model through a predetermined point, which may be located on the axis of either the concentration or analytical value axis (ie, either an x or y-intercept point). In some cases, this predetermined point is the origin (0,0) where both the concentration and analytical value are expected to be zero, but there may be other situations where either the analytical value or the concentration (or both) are non-zero. Such non-zero intercepts are also intended to be included within the present teachings. The determination of the best fit of the points to the arbitrary model is determined by usage of an initiating first curve fit metric. This metric is an analytical manner of determining how well a calculated curve fit model represents the actual data points utilized to determine the model. For linear curve fit models determined through linear regression for example, this is most often performed by calculating the coefficient of determination ($R^2$ value) which is a fractional value between 0 and 1, with 1 representing a very good linear fit and 0 representing no linear fit at all. $R^2$ can be determined for example using the following formula in ordinary least squares scenarios.

$$R^2 = 1 - \frac{\sum_{i=1}^{N}(y_i - \hat{y}_i)^2}{\sum_{i=1}^{N}(y_i - \bar{y}_i)^2}$$

Where y is the dependent variable

N is the total number of values of y;
$\hat{y}$ is value predicted by the model
$\bar{y}$ is the mean of the y values

A similar parameter is "r" which is the correlation coefficient which may also be used. Other curve fit metrics may also be utilized which include the usage of accuracy where a ratio of the known values compared to that predicted by the regression model is determined. Acceptable accuracy required for a given model may generally require that all points meet some arbitrary threshold. In some embodiments, this threshold is +/- 30%. That is, all actual points must be within 30% of the determined regression model. In other embodiments, the threshold for accuracy is +/- 20%. In other embodiments, not all points may be required to meet the arbitrary threshold. In some embodiments, when multiple data points may exist at the same concentration, an additional metric relating to the co-efficient of variation (CV) can be utilized. If the percent CV is determined to exceed some arbitrary value, any average value is determined to be improper and therefore such a point should be excluded. In some embodiments, the CV can typically be in the range of 20-30%. Alternatively if an average value for an analytical value is not being determined and individual points are being included, points at a given concentration that are outside the CV threshold can be individually excluded. Such a CV metric can only be utilized in combination with other metrics. In some embodiments, multiple individual metrics may be combined into one in either a weighted or non-weighted manner to arrive at an overall metric that can be utilized with the within teachings. In some embodiments, all individual metrics may need to be met individually in order for a point to be considered to be acceptable. When accuracy is not being used at the initiating curve fit metric, it is preferable to force the derived model through a predetermined point, such as the origin. When accuracy is being used, suitable models can be obtained that are not required to be forced through a predetermined point.

The number of points that comprise the subset may vary based on the total number of points being represented. For example, it may be at least 10% of the total number and not more than 50%, preferably it is greater than about 20%. Generally, the subset must contain at least three points, but preferably at least four.

The best subset is determined through an iterative technique where each point and the immediately following n number of points where the total number of points in the subset is (n+1) is subjected to a form of curve fit analysis to determine the best fit for the arbitrary model. The model and analysis can include such types as linear, power, exponential or other non-linear types of curve fitting processes. The determination of the best fit is determined by way of the initiating curve fit metric which determines how well a generated model represents the actual points utilized to determine the model. When the data points comprise multiple points at the same concentration, the technique involves the usage of a point or points at a given concentration level and the following point or points at the following n concentration levels.

The initiating curve fit metric is then determined systematically for all the possible subsets of continuous data points or continuous concentration levels that contain a fixed number of points and are optionally forced through the predetermined point. The set of data points with the best fit metric is then selected for further processing. There may be times when two different subsets of points have similar best fit metrics. In such cases, the subset of points that is most central (ie, in the middle) of the overall spread of data points available is preferably used. In the case where the curve fit model is expected to be linear, a regression coefficient can be determined for the linear regression model that can be optionally forced through the predetermined point such as the origin and the process is then repeated for other sequential points (or concentration levels) on the calibration curve.

Once this subset of points has been determined, a curve fit model equation is calculated for this chosen series, but is specifically not forced through the predetermined point (as may have been the case when determining the initial series of points) and a supplemental second curve fit metric is calculated. The supplemental curve fit metric may be based on the same metric that was used to calculate the initiating curve fit metric or may be different. Optionally, at this point, the supplemental curve fit metric may show that some points no longer meet the requirements for including such points in the model. This has the potential to occur when the initiating curve fit metric is calculated in a manner that includes the forcing of the determined model through a particular point, but the supplemental curve metric model does not. These points may optionally be removed at this point. Preferably, this additional removal step is only performed on points that are part of a series of more than one points at a given concentration (ie, the removal of such a point(s) at a given concentration will still leave calibration points available for modelling at that concentration).

An attempt is then made to grow the subset of points by systematically analyzing the next available point either directly above or below the initially determined selected subset of points and any other previous points that had been tested during this growing phase. This point (or points if there is more than one point at a given concentration) are analyzed one at a time and it is determined if the inclusion of such a point (or points) would generate an acceptable overall fit for a calculated curve fit model including the point based on the supplemental fit metric and if so, the point is added to the subset of points and the process is repeated. Preferably, the next available point to consider alternates between the next available higher point and the lower point. The first point to be testing during the growing phase can either be the next highest or next lowest point. In some embodiments, it may be determined that no additional points can be added to the original subset of points and therefore all additional points are considered to be outliers. In cases where there are multiple points at a given concentration level, the point or points at the next concentration level as opposed to one additional point is utilized. Determining if the supplemental curve fit metric with the new point still results in an acceptable fit can be performed by any criteria in which numbers can be numerically compared. In one embodiment, it can be required that the curve fit metric with the new point be either higher than, or within a certain percentage of the previous curve fit metric. In other embodiments, the new curve fit metric must be higher than or equal to the previous curve fit metric. For example, in the case of the use of r, it is possible to define that any new value of r with the additional point(s) be higher than the previous value of r or, if lower, within 20% of the previous value of r. In some embodiments, this threshold can be 10%, 5% or 1%. In some embodiments, this curve fit metric can be the number of points that are found to have acceptable accuracy in relation to a predetermined threshold or can be the r or $R^2$ referred to previously.

Additionally, it is optional that the curve fitting calculations performed according to the within teachings may incorporate a weighting factor that may compensate for differences in variations that are a function of concentration. Such weighting factors are sometimes necessary in chemical measurement systems where the standard deviation may increase with concentration. Such weighting factors may include one or more or 1 (no weighting factor), $1/x$, $1/x2$, $1/y$, $1/y^2$ and log (x). This weighting factor may be utilized in one or both of the determination of the initial subset of points and the method that is utilized to "grow" the subset of points. Methods of incorporating weighting factors into the derivation of a calibration model are known in the art.

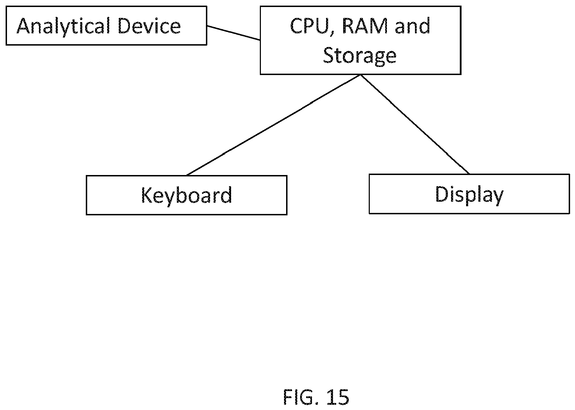

The within teachings and more specifically, some of the processing steps described in the within described methods can be performed on a controller that comprises specialized hardware or done on a digital computer. The computer can include a control section, a data I/O controller, a display member, and a keyboard. The control section has a function of performing operation control of each mechanism in the measurement unit (ie, analytical device), and analyzing information obtained from the measurement unit. The control section may comprise of processing unit such as CPU, ROM, RAM, and the like. The display member is provided to display the analysis result obtained by the control section, and to display graphs etc. of the calibration curve to be hereinafter described, if necessary. This display member can be for example, a monitor, screen or physical output such as a printer. Preferably, the computer or controller is operably connected and configured such that it is utilized to control the analytical device and exchanges information with the analytical device so that it is intricately linked with the devices operation, as for example, depicted in FIG. 15. Particularly this configuration is particularly useful when the analytical device is a mass spectrometer.

Example 1

A set of 10 data points is depicted in Table 1. This data includes a series of analytical values in the form of peak areas obtained at various concentrations which is assumed to show a linear correlation. The data also includes several analytical points obtained at the same concentration.

**Table 1**

| Concentration ($\mu$g/ml) | Intensity (Counts) |
|---|---|
| 5 | 250 |
| 10 | 300 |
| 10 | 700 |
| 10 | 800 |
| 20 | 1550 |
| 20 | 1600 |
| 20 | 1500 |
| 50 | 3000 |
| 100 | 6300 |
| 200 | 8100 |

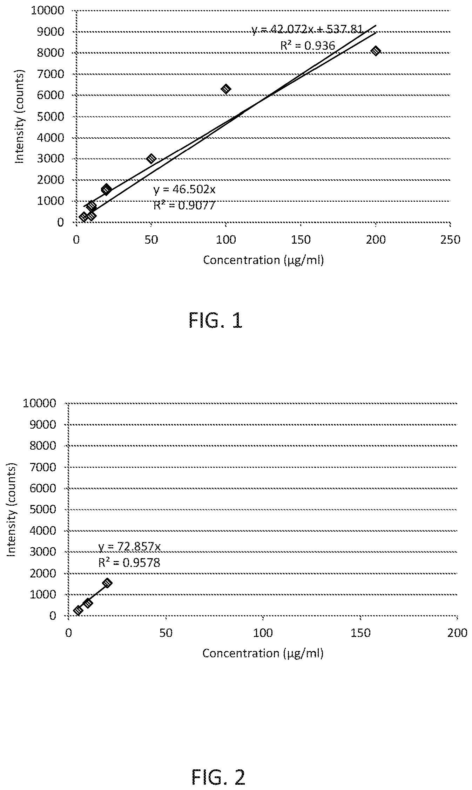

As a possible first step, the concentrations that have points with multiple analytical values are first analyzed and it is determined if any such points are statistical outliers. If so, they are removed. Once outliers have been removed, the remaining value points are averaged to obtain a representative peak area for the given concentration. For the purpose of illustrating an embodiment of the method described herein, it has been assumed that all the data points at a given concentration are valid and average of the points obtained at concentration 10 and 20 were obtained. A plot of these points is depicted in FIG. 1, along with a linear regression line fitted to the points and to the points when forced through the origin (the equation with no intercept). The coefficient of determination for both of these curves is not ideal and the determined curve fit model is not optimal.

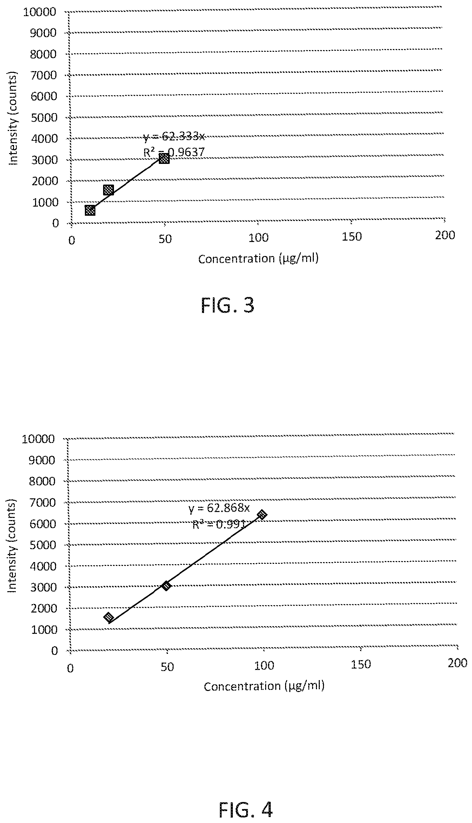

An initial search of the data points is performed to determine a subset of sequential points having the best linear fit when forced through the origin. In this example, a subset of 3 sequential points has been utilized, though any number that is less than the total number of points may be utilized. This is performed by sequentially analyzing each point along with the two points immediately following until all possible 3 point combinations have been tested. The best linear fit that is forced through the origin is determined by an analysis of the generated linear fit models having the highest coefficient of determination ($R^2$ value). FIGS. 2 through 5 depict this step wise sequence of determining the optimal linear fit for this sequence of data. As is evident from the plots, the data points at concentrations 20 $\mu$g/ml, 50 $\mu$g/ml and 100 $\mu$g/ml (FIG. 4) are most optimum. A linear regression model is then determined for these three points where the model is not forced through the origin. The linear regression model is then attempted to be improved by sequentially adding the next available point to the regression model either immediately below or above the original points determined (20 $\mu$g/ml, 50 $\mu$g/ml, and 100 $\mu$g/ml) and the model retested to determine if the fit is still acceptable. The tested points optionally alternate between the next lowest to the next highest, testing in sequence, the points at 10 $\mu$g/ml, 200 $\mu$g/ml and 5 $\mu$g/ml. Their corresponding curve fit model and corresponding regression models are determined. Table 2 lists the outcome of this analysis.

**Table 2**

| Action | Linear Regression Model | $R^2$ | Decision |
|---|---|---|---|
| Regression based on 20,50, 100 $\mu$g/ml | y = 60.05 1x + 213.78 | 0.9940 | Original Regression model |

(continued)

| Action | Linear Regression Model | R² | Decision |
|---|---|---|---|
| add 10 μg/ml point and test | y = 61.582x + 91.327 | 0.9949 | 0.9949>0.9940 Better model - Include point |
| add 200 μg/ml point and test | y = 39.436x + 912.85 | 0.9234 | 0.9234<0.9949 Worse model - Exclude point |
| add 5 μg/ml point and test | y = 62.354x + 32.888 | 0.9955 | 0.9955>0.9949 Better model - Include point |

Therefore once, the points that are utilized in the generated linear model are 10 μg/ml,20 μg/ml, 50 μg/ml, 100 μg/ml and 200 μg/ml, the final best fit regression based on this data set is y = 62.354x + 32.888.

Example 2

A set of 23 data points is depicted in Table 3 and subjected to the within teachings utilizing a 1/x weighting factor and a linear fit.

**Table 3**

| Concentration (μg/ml) | Intensity (Area) |
|---|---|
| 0.05 | 1.48E+02 |
| 0.1 | 5.03E+02 |
| 0.1 | 6.08E+02 |
| 0.1 | 1.31E+02 |
| 0.1 | 7.87E+02 |
| 0.2 | 1.32E+02 |
| 0.5 | 4.36E+02 |
| 1 | 5.95E+02 |
| 1 | 2.91E+02 |
| 1 | 4.72E+02 |
| 1 | 4.43E+02 |
| 1 | 1.10E+03 |
| 2 | 3.03E+02 |
| 5 | 3.38E+02 |
| 10 | 2.51E+03 |
| 10 | 1.01E+03 |
| 10 | 9.45E+02 |
| 10 | 1.26E+03 |
| 10 | 6.36E+02 |
| 20 | 3.43E+03 |
| 50 | 8.92E+03 |
| 100 | 1.85E+04 |
| 200 | 2.12E+04 |

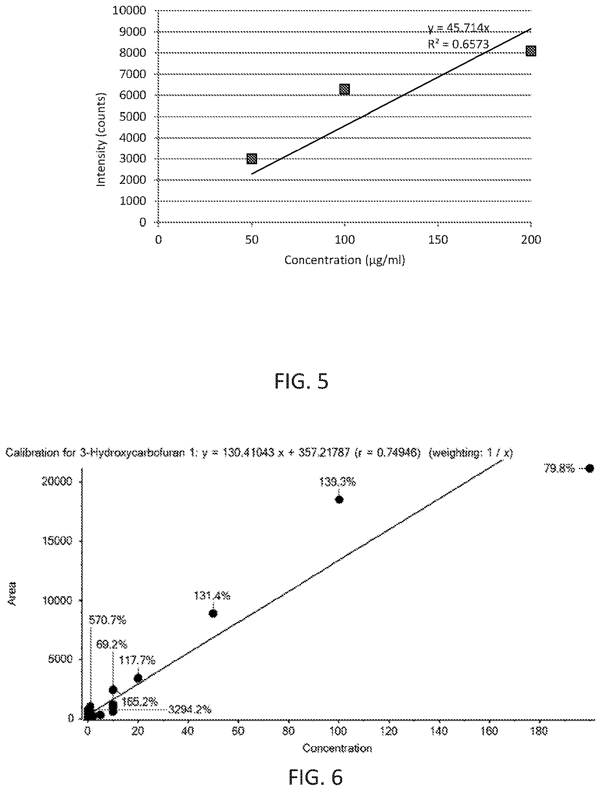

A standard linear curve fit for these data points with a 1/x weighting is depicted in FIG. 6. As is evident, the value for r is poor. Select points have been labeled with a measure of their accuracy which is utilized as a calibration curve metric (100% * actual value/predicted value).

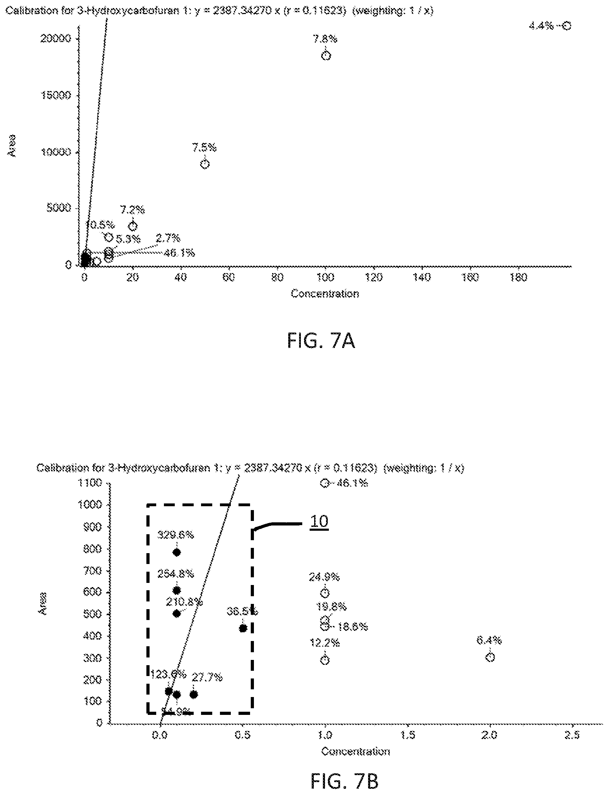

FIGS. 7A and B depicts plots of the initial procedure of identifying an initial subset of points that best fits a linear model that is forced through the origin. In these figures, solid filled circles are points that were utilized in creating the model whereas non-filled circles are points not utilized in the model. FIG 7B shows a zoomed in area of FIG 7A in the vicinity of the origin. A sliding window 10 of points from four concentration levels are initially utilized as seen in FIG 7B, This initial window has 7 points, 4 points obtained at concentration level 0.1 and one each from 0.05, 0.2 and 0.5. As depicted both the accuracies and the level of r are poor.

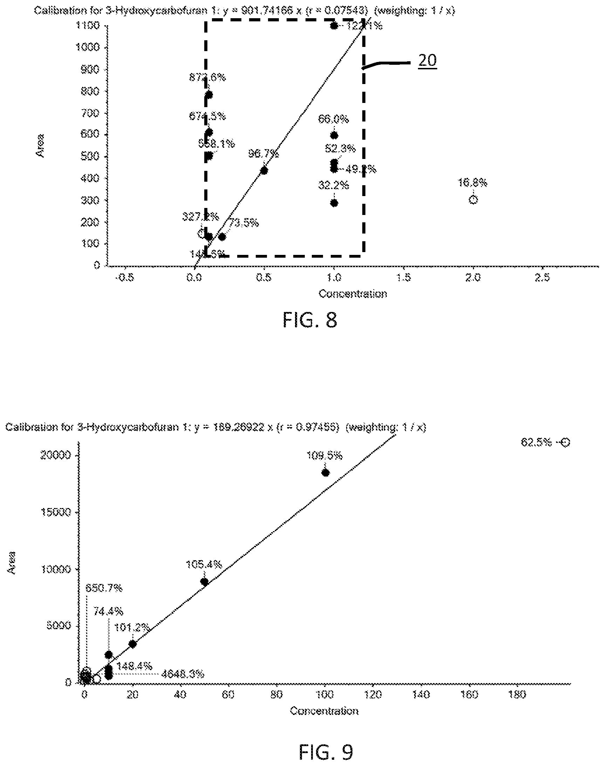

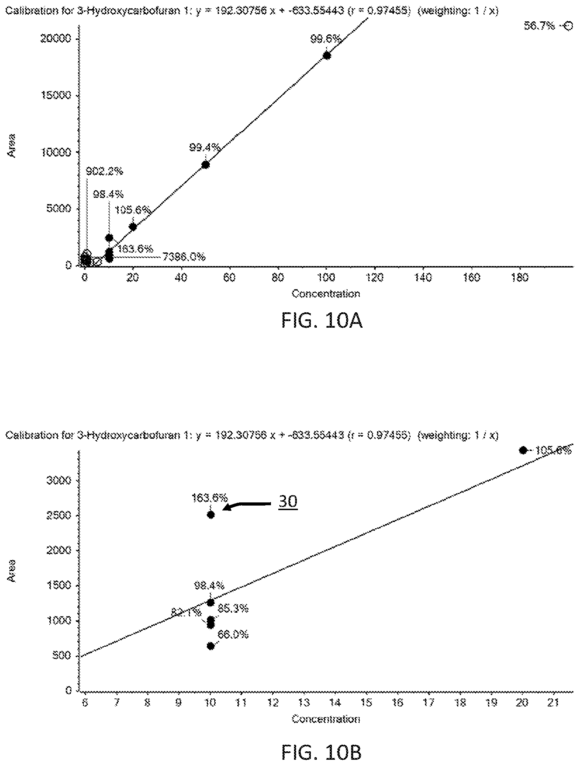

FIG 8 depicts the next window 20 of concentration levels being utilized. These being the points at 0.1, 0.2, 0.5 and 1.0. The r value for this plot is poor. The process is repeated by moving the sliding window up through all the points until all concentration levels have been considered. The window containing the best fit as determined by r value is then utilized for further processing. For purpose of brevity, the individual plots for each of the sliding windows is not presented here, but can be obtained by persons of ordinary skill using the within teachings. The best available fit for these data points is determined to be when using concentration levels 10 $\mu$g/ml, 20 $\mu$g/ml, 50 $\mu$g/ml and 100 $\mu$g/ml which model fit is displayed in FIG 9. These points are then utilized to generate a calibration curve model that is not forced through the origin. This model is depicted in FIG 10A and B. FIG 10B is a zoomed in plot of 10A.

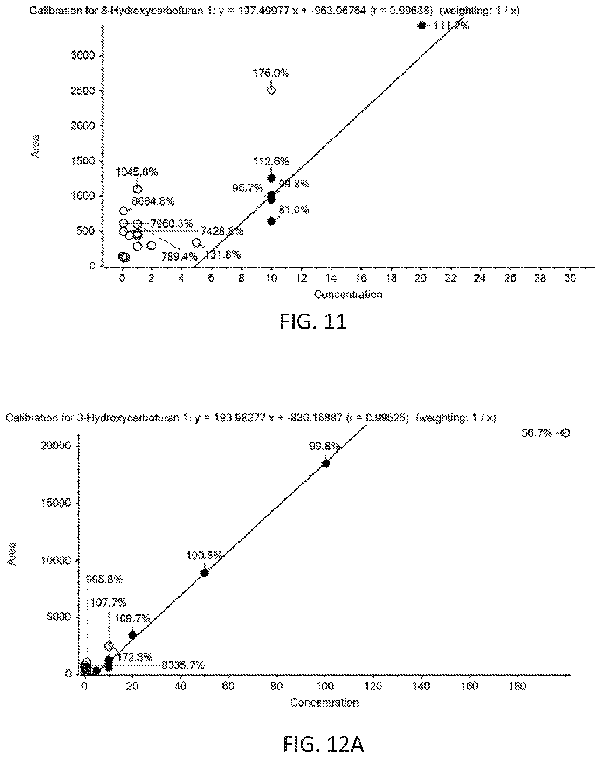

An analysis of the new generated model depicted in FIG 10B for accuracy of each point indicates that one of the points **30** at concentration level 10 $\mu$g/ml is outside of the desired bound of a predetermined accuracy threshold of being within 30% of the calculated model (ie, 163.6%). This one point is removed, resulting in a new regression model which is depicted in FIG 11.

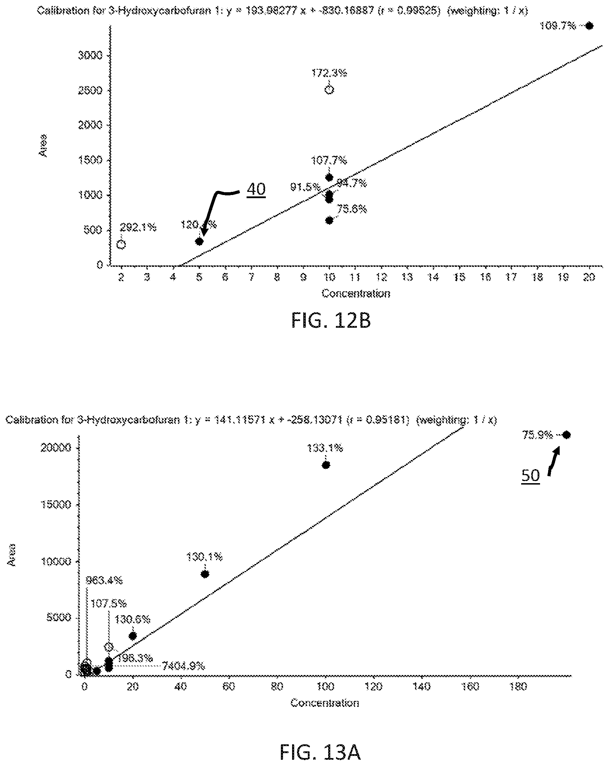

The subset of data points is then added to by considering additional points that are at the next available concentration level either directly above or directly below the originally determined subset of points. In this example, the additional point 40 at concentration 5 $\mu$g/ml is incorporated into the model and a new regression line is calculated that is depicted in FIG 12A and B. For these data points, the accuracy of all the points to the regression model is still within the acceptable threshold value, even though the value of r has decreased slightly (from r=0.99633 to r=0.99525). The point is therefore kept and the initial subset of points now comprises data from five concentration levels.

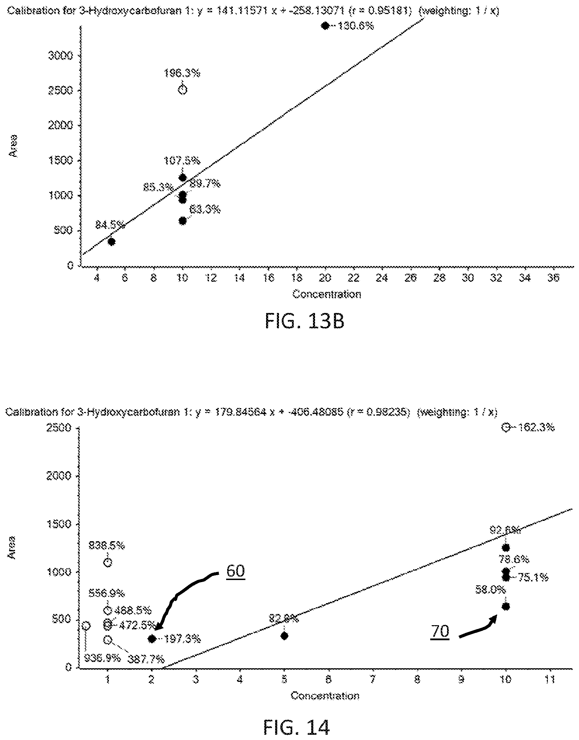

The next available point 50 in the series is attempted which includes points available at the next higher concentration level (ie, 200 $\mu$g/ml). A new regression model is calculated and depicted in FIG 13A and B. As is seen, the r value decreases and the accuracy for several of the points increases beyond the 30% threshold. Therefore this point is excluded from the model.

The next available point 60 to be tested is the point at concentration level 2 $\mu$g/ml and a new model is calculated and a portion of the plot is depicted in FIG 14. The accuracy of this model is poor and the point at concentration 2 $\mu$g/ml has very poor accuracy and it spoils the accuracy of one of the points 70 at concentration level 10 $\mu$g/ml. This point is therefore excluded. Additionally, the points at concentration levels 1 $\mu$g/ml and 0.1 $\mu$g/ml are also considered separately (not shown for brevity) and like the point at concentration level 2 $\mu$g/ml, they skew the resulting curve such that the accuracy of the points when compared to the model are considered to be poor. Accordingly, the generated model which is deemed to have good accuracy and an acceptable r value is the one which was generated and is depicted in FIG 12A and 12 B with the equation of y=193.98277x -830.16887.

### Example 3

A pesticide screening run was conducted in a mass spectrometer in which more than 175 compounds were monitored. In order to cover the full dynamic range for the various compounds, standard curves used twelve different concentration levels for each compound was performed using the within teachings and compared to curves generated manually by a trained operator, where individual points, deemed to be unsuitable were removed from the curve fitting process.

In almost all cases, the automated method according to the present teachings excluded virtually the same points from the calibration curves (i.e. points below the LLOQ, above the ULOQ and other outliers) as the trained operator. Time wise, less than five seconds was required to process all analytes in contrast to the several hours that was required for a manual approach.

The invention described within the within teachings is not limited solely to the embodiments described above, but instead many variations are possible within the scope of the inventive concept defined by the claims below.

**Claims**

**1.** A method of determining the concentration of one or more analytes in a sample, said method comprising:

a) providing a plurality of calibration standards for each of said one or more analytes, each of said calibration standards containing a known concentration of the one or more analytes;

b) providing a mass spectrometer;

c) providing a digital computer operably connected to said mass spectrometer, said digital computer comprising a processing unit, a data I/O controller for receiving and sending information to and from said mass spectrometer, a display member, and a data storage device;

d) determining a peak area value for each of said one or more analytes in each of said calibration standards by analyzing each of said calibration standards containing the known concentration in said mass spectrometer and for each of said one or more analytes, associating each of said peak area value with its corresponding calibration standard concentration as a calibration point pair in said data storage device;

e) for each of said one or more analytes, using said processing unit to identify a subset of calibration point pairs, for use in generating a calibration curve, that best fits a predefined curve fit type, the subset of calibration point pairs being pairs at consecutive concentration levels and the determination of best fit being performed by use of a first curve fit metric;

f) for each of said one or more analytes, using said processing unit to increase the number of calibration point pairs in the subset, by testing whether the inclusion of one or more additional calibration point pairs at a next immediate concentration level either higher or lower than the subset and any other calibration point pair previously tested would result in the generation of a suitable calibration curve by way of a second curve fit metric, and including said additional calibration point pair into said subset if it is;

g) repeating step f) until all calibration point pairs for each of said one or more analytes have been tested;

h) for each of said one or more analytes, using said processing unit to create a calibration curve from the resulting subset of calibration point pairs by determining coefficients and/or exponents of a model equation of said predefined curve fit type and storing said coefficients and/or exponents of the model equation in the data storage device;

i) performing a mass spectrometer analysis on the sample, the sample containing or suspected of containing an unknown concentration of the one or more of the analytes and obtaining an unknown peak area value for each of the one or more analytes;

j) for each of the one or more analytes, using said processing unit to correlate the unknown peak area value to a determined concentration using said model equation;

k) outputting said determined concentration for each of said one or more analytes on said display member.

2. The method of claim 1, wherein the predefined curve fit type is linear, the first curve fit metric is r or $R^2$ and the identifying of the subset of calibration point pairs is performed by:

i) selecting one or more calibration point pairs at each of 3 or 4 consecutive concentration levels and performing linear regression on said calibration point pairs so as to determine r or $R^2$ and coefficients of a linear equation;

ii) iteratively repeating step i) until all possible one or more calibration point pairs at consecutive 3 or 4 concentration levels have had their r or $R^2$ and coefficients of a linear equation determined; and

iii) setting the subset of calibration pairs to be the one or more calibration point pairs at each of 3 or 4 consecutive concentration levels that has the highest r or $R^2$ value.

3. The method of claim 2, wherein the linear regression is performed by forcing the coefficients of the linear equation through a predetermined calibration point;

4. The method of claim 3, wherein the predetermined calibration point is the origin (0,0).

5. The method of claim 2, wherein the curve fit metric is $R^2$.

6. The method of claim 1, wherein the predefined curve fit type is a linear or quadratic function.

7. The method of claim 1, wherein the subset contains at least 20% of the total number of calibration point pairs.

8. The method of claim 1, wherein the subset of points initially contains 3 or 4 calibration point pairs.

9. The method of claim 1, wherein the first curve fit metric is accuracy.

10. The method of claim 9, wherein a threshold for the accuracy of +/- 30% is utilized.

**11.** The method of claim 1, wherein the second curve fit metric is the same as the first curve fit metric.

**12.** The method of claim 1, wherein the first curve fit metric includes the forcing of the best fit through a predetermined point and wherein the second curve fit metric does not utilize the forcing through a predetermined point.

**13.** The method of claim 12, wherein the predetermined point is the origin.

**14.** The method of claim 1, wherein in step f), no additional calibration point pairs are added to the subset.

**15.** The method of claim 1, wherein the curve fit metric comprises both accuracy and one of either r or $R^2$.

**Patentansprüche**

**1.** Verfahren zur Bestimmung der Konzentration eines oder mehrerer Analyten in einer Probe, wobei das Verfahren Folgendes umfasst:

a) Bereitstellen einer Vielzahl von Kalibrierstandards für jeden der einen oder mehreren Analyten, wobei jeder der Kalibrierstandards eine bekannte Konzentration des einen oder der mehreren Analyten enthält;
b) Bereitstellen eines Massenspektrometers;
c) Bereitstellen eines Digitalcomputers, der betriebsfähig mit dem Massenspektrometer verbunden ist, wobei der Digitalcomputer eine Verarbeitungseinheit, eine Daten-E/A-Steuerung zum Empfangen und Senden von Informationen zu und von dem Massenspektrometer, ein Anzeigeelement und eine Datenspeichervorrichtung umfasst;
d) Bestimmen eines Peakflächenwertes für jeden des einen oder der mehreren Analyten in jedem der Kalibrierungsstandards durch Analysieren jedes der Kalibrierungsstandards, die die bekannte Konzentration enthalten, in dem Massenspektrometer und für jeden des einen oder der mehreren Analyten, Zuordnen jedes der Peakflächenwerte zu seiner entsprechenden Kalibrierungsstandardkonzentration als Kalibrierungspunktpaar in der Datenspeichervorrichtung;
e) für jeden des einen oder der mehreren Analyten, Verwenden der Verarbeitungseinheit, um eine Teilmenge von Kalibrierungspunktpaaren zur Verwendung beim Erzeugen einer Kalibrierungskurve zu identifizieren, die am besten zu einem vordefinierten Kurvenanpassungstyp passt, wobei die Teilmenge von Kalibrierungspunktpaaren Paare auf aufeinanderfolgenden Konzentrationsniveaus sind und die Bestimmung der besten Anpassung durch Verwenden einer ersten Kurvenanpassungsmetrik durchgeführt wird;
f) für jeden des einen oder der mehreren Analyten, Verwenden der Verarbeitungseinheit, um die Anzahl der Kalibrierungspunktpaare in der Teilmenge zu erhöhen, indem getestet wird, ob die Aufnahme eines oder mehrerer zusätzlicher Kalibrierungspunktpaare bei einem nächsten unmittelbaren Konzentrationsniveau, das entweder höher oder niedriger als die Teilmenge ist, und jedes anderen zuvor getesteten Kalibrierungspunktpaars zur Erzeugung einer geeigneten Kalibrierungskurve mittels einer zweiten Kurvenanpassungsmetrik führen würde, und Aufnehmen des zusätzlichen Kalibrierungspunktpaares in die Teilmenge, wenn dies der Fall ist;
g) Wiederholen von Schritt f), bis alle Kalibrierungspunktpaare für jeden der ein oder mehreren Analyten getestet worden sind;
h) für jeden des einen oder der mehreren Analyten, Verwenden der Verarbeitungseinheit, um eine Kalibrierungskurve aus der resultierenden Teilmenge von Kalibrierungspunktpaaren durch Bestimmen von Koeffizienten und/oder Exponenten einer Modellgleichung des vordefinierten Kurvenanpassungstyps und Speichern der Koeffizienten und/oder Exponenten der Modellgleichung in der Datenspeichereinrichtung zu erstellen;
i) Durchführen einer Massenspektrometeranalyse an der Probe, wobei die Probe eine unbekannte Konzentration des einen oder mehrerer Analyten enthält oder vermutlich enthält, und Erhalten eines unbekannten Peakflächenwertes für jeden des einen oder der mehreren Analyten;
j) für jeden des einen oder der mehreren Analyten, Verwenden der Verarbeitungseinheit, um den unbekannten Peakflächenwert mit einer bestimmten Konzentration unter Verwendung der Modellgleichung zu korrelieren;
k) Ausgeben der bestimmten Konzentration für jeden der einen oder mehreren Analyten auf dem Anzeigeelement.

**2.** Verfahren nach Anspruch 1, wobei der vordefinierte Kurvenanpassungstyp linear ist, die erste Kurvenanpassungsmetrik r oder $R^2$ ist und das Identifizieren der Teilmenge von Kalibrierungspunktpaaren durch Folgendes durchgeführt wird:

i) Auswählen eines oder mehrerer Kalibrierungspunktpaare bei jedem von 3 oder 4 aufeinanderfolgenden Konzentrationsniveaus und Durchführen einer linearen Regression an den Kalibrierungspunktpaaren, um r oder $R^2$ und die Koeffizienten einer linearen Gleichung zu bestimmen;

ii) iteratives Wiederholen von Schritt i), bis für alle möglichen ein oder mehreren Kalibrierungspunktpaare auf 3 oder 4 aufeinanderfolgenden Konzentrationsniveaus ihr r oder $R^2$ und die Koeffizienten einer linearen Gleichung bestimmt worden sind; und

iii) Festlegen der Teilmenge von Kalibrierungspaaren als das eine oder die mehreren Kalibrierungspunktpaare auf jedem der 3 oder 4 aufeinanderfolgenden Konzentrationsniveaus, das den höchsten r- oder $R^2$-Wert aufweist.

3. Verfahren nach Anspruch 2, wobei die lineare Regression durchgeführt wird, indem die Koeffizienten der linearen Gleichung durch einen vorbestimmten Kalibrierungspunkt gezwungen werden;

4. Verfahren nach Anspruch 3, wobei der vorbestimmte Kalibrierungspunkt der Ursprung (0,0) ist.

5. Verfahren nach Anspruch 2, wobei die Kurvenanpassungsmetrik $R^2$ ist.

6. Verfahren nach Anspruch 1, wobei der vordefinierte Kurvenanpassungstyp eine lineare oder quadratische Funktion ist.

7. Verfahren nach Anspruch 1, wobei die Teilmenge mindestens 20 % der Gesamtzahl der Kalibrierungspunktpaare enthält.

8. Verfahren nach Anspruch 1, wobei die Teilmenge von Punkten anfänglich 3 oder 4 Kalibrierungspunktpaare enthält.

9. Verfahren nach Anspruch 1, wobei die erste Kurvenanpassungsmetrik die Genauigkeit ist.

10. Verfahren nach Anspruch 9, wobei ein Schwellenwert für die Genauigkeit von +/-30% verwendet wird.

11. Verfahren nach Anspruch 1, wobei die zweite Kurvenanpassungsmetrik dieselbe ist wie die erste Kurvenanpassungsmetrik.

12. Verfahren nach Anspruch 1, wobei die erste Kurvenanpassungsmetrik das Erzwingen der besten Anpassung durch einen vorbestimmten Punkt umfasst und wobei die zweite Kurvenanpassungsmetrik das Erzwingen durch einen vorbestimmten Punkt nicht verwendet.

13. Verfahren nach Anspruch 12, wobei der vorbestimmte Punkt der Ursprung ist.

14. Verfahren nach Anspruch 1, wobei in Schritt f) keine zusätzlichen Kalibrierungspunktpaare zu der Teilmenge hinzugefügt werden.

15. Verfahren nach Anspruch 1, wobei die Kurvenanpassungsmetrik sowohl die Genauigkeit als auch eines von r oder $R^2$ umfasst.

**Revendications**

1. Procédé de détermination de la concentration d'un ou plusieurs analytes dans un échantillon, ledit procédé comprenant :

   a) la fourniture d'une pluralité de normes d'étalonnage pour chacun desdits un ou plusieurs analytes, chacune desdites normes d'étalonnage contenant une concentration connue de l'un ou plusieurs analytes ;
   b) la fourniture d'un spectromètre de masse ;
   c) la fourniture d'un ordinateur numérique connecté fonctionnellement audit spectromètre de masse, ledit ordinateur numérique comprenant une unité de traitement, un contrôleur d'E/S de données pour recevoir et envoyer des informations vers et depuis ledit spectromètre de masse, un élément d'affichage et un dispositif de stockage de données ;
   d) la détermination d'une valeur d'aire de pic pour chacun desdits un ou plusieurs analytes dans chacune desdites normes d'étalonnage en analysant chacune desdites normes d'étalonnage contenant la concentration connue dans ledit spectromètre de masse et pour chacun desdits un ou plusieurs analytes, associant chacune desdites valeurs d'aire de pic avec sa concentration de norme d'étalonnage correspondante en tant que paire de points d'étalonnage dans ledit dispositif de stockage de données ;

e) pour chacun desdits un ou plusieurs analytes, l'utilisation de ladite unité de traitement pour identifier un sous-ensemble de paires de points d'étalonnage, à utiliser pour générer une courbe d'étalonnage, qui s'ajuste le mieux à un type d'ajustement de courbe prédéfini, le sous-ensemble de paires de points d'étalonnage étant des paires à des niveaux de concentration consécutifs et la détermination du meilleur ajustement étant effectuée à l'aide d'une première métrique d'ajustement de courbe ;

f) pour chacun desdits un ou plusieurs analytes, l'utilisation de ladite unité de traitement pour augmenter le nombre de paires de points d'étalonnage dans le sous-ensemble, en testant si l'inclusion d'une ou plusieurs paires de points d'étalonnage supplémentaires à un niveau de concentration immédiat suivant supérieur ou inférieur que le sous-ensemble et toute autre paire de points d'étalonnage précédemment testés entraîneraient la génération d'une courbe d'étalonnage appropriée au moyen d'une deuxième métrique d'ajustement de courbe, et incluant ladite paire de points d'étalonnage supplémentaire dans ledit sous-ensemble si c'est le cas ;

g) la répétition de l'étape f) jusqu'à ce que toutes les paires de points d'étalonnage pour chacun desdits un ou plusieurs analytes aient été testées ;

h) pour chacun desdits un ou plusieurs analytes, l'utilisation de ladite unité de traitement pour créer une courbe d'étalonnage à partir du sous-ensemble résultant de paires de points d'étalonnage en déterminant des coefficients et/ou des exposants d'une équation modèle dudit type d'ajustement de courbe prédéfini et en stockant lesdits coefficients et /ou exposants de l'équation modèle dans le dispositif de stockage de données ;

i) l'exécution d'une analyse par spectromètre de masse sur l'échantillon, l'échantillon contenant ou suspecté de contenir une concentration inconnue de l'un ou plusieurs des analytes et l'obtention d'une valeur d'aire de pic inconnue pour chacun de l'un ou plusieurs analytes ;

j) pour chacun de l'un ou plusieurs analytes, l'utilisation de ladite unité de traitement pour corréler la valeur d'aire de pic inconnue à une concentration déterminée en utilisant ladite équation modèle ;

k) la sortie de ladite concentration déterminée pour chacun desdits un ou plusieurs analytes sur ledit élément d'affichage.

2. Procédé selon la revendication 1, dans lequel le type d'ajustement de courbe prédéfini est linéaire, la première métrique d'ajustement de courbe est r ou $R^2$ et l'identification du sous-ensemble de paires de points d'étalonnage est effectuée en :

i) sélectionnant une ou plusieurs paires de points d'étalonnage à chacun de 3 ou 4 niveaux de concentration consécutifs et en effectuant une régression linéaire sur lesdites paires de points d'étalonnage de manière à déterminer r ou $R^2$ et les coefficients d'une équation linéaire ;

ii) répétant de manière itérative l'étape i) jusqu'à ce que toutes les paires de points d'étalonnage possibles à 3 ou 4 niveaux de concentration consécutifs aient eu leur r ou $R^2$ et les coefficients d'une équation linéaire déterminés ; et

iii) définissant le sous-ensemble de paires d'étalonnage comme étant une ou plusieurs paires de points d'étalonnage à chacun des 3 ou 4 niveaux de concentration consécutifs ayant la valeur r ou $R^2$ la plus élevée.

3. Procédé selon la revendication 2, dans lequel la régression linéaire est effectuée en forçant les coefficients de l'équation linéaire à passer par un point d'étalonnage prédéterminé.

4. Procédé selon la revendication 3, dans lequel le point d'étalonnage prédéterminé est l'origine (0,0).

5. Procédé selon la revendication 2, dans lequel la métrique d'ajustement de courbe est $R^2$.

6. Procédé selon la revendication 1, dans lequel le type d'ajustement de courbe prédéfini est une fonction linéaire ou quadratique.

7. Procédé selon la revendication 1, dans lequel le sous-ensemble contient au moins 20% du nombre total de paires de points d'étalonnage.

8. Procédé selon la revendication 1, dans lequel le sous-ensemble de points contient initialement 3 ou 4 paires de points d'étalonnage.

9. Procédé selon la revendication 1, dans lequel la première métrique d'ajustement de courbe est la précision.

**10.** Procédé selon la revendication 9, dans lequel un seuil de précision de +/- 30% est utilisé.

**11.** Procédé selon la revendication 1, dans lequel la deuxième métrique d'ajustement de courbe est la même que la première métrique d'ajustement de courbe.

**12.** Procédé selon la revendication 1, dans lequel la première métrique d'ajustement de courbe comprend le forçage du meilleur ajustement par un point prédéterminé et dans lequel la deuxième métrique d'ajustement de courbe n'utilise pas le forçage par un point prédéterminé.

**13.** Procédé selon la revendication 12, dans lequel le point prédéterminé est l'origine.

**14.** Procédé selon la revendication 1, dans lequel dans l'étape f), aucune paire de points d'étalonnage supplémentaire n'est ajoutée au sous-ensemble.

**15.** Procédé selon la revendication 1, dans lequel la métrique d'ajustement de courbe comprend à la fois la précision et l'un de r ou $R^2$.

FIG. 1

FIG. 2

FIG. 3

FIG. 4

FIG. 5

FIG. 6

FIG. 7A

FIG. 7B

FIG. 8

FIG. 9

FIG. 10A

FIG. 10B

Calibration for 3-Hydroxycarbofuran 1: y = 197.49977 x + -963.96764 (r = 0.99633) (weighting: 1 / x)

FIG. 11

Calibration for 3-Hydroxycarbofuran 1: y = 193.98277 x + -830.16887 (r = 0.99525) (weighting: 1 / x)

FIG. 12A

EP 3 250 917 B1

Calibration for 3-Hydroxycarbofuran 1: y = 193.98277 x + -830.16887 (r = 0.99525)  (weighting: 1 / x)

FIG. 12B

Calibration for 3-Hydroxycarbofuran 1: y = 141.11571 x + -258.13071 (r = 0.95181)  (weighting: 1 / x)

FIG. 13A

23

Calibration for 3-Hydroxycarbofuran 1: y = 141.11571 x + -258.13071 (r = 0.95181)  (weighting: 1 / x)

FIG. 13B

Calibration for 3-Hydroxycarbofuran 1: y = 179.84564 x + -406.48085 (r = 0.98235)  (weighting: 1 / x)

FIG. 14

```
┌─────────────────────┐        ┌─────────────────────┐
│  Analytical Device  │────────│   CPU, RAM and      │
│                     │        │     Storage         │
└─────────────────────┘        └─────────────────────┘
                                    /          \
                                   /            \
                                  /              \
                   ┌──────────────────┐   ┌──────────────────┐
                   │     Keyboard     │   │     Display      │
                   └──────────────────┘   └──────────────────┘
```

FIG. 15

**EP 3 250 917 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1672673 A2